# EUROPÄISCHE PATENTANMELDUNG

(11) **EP 2 586 519 A1**
(43) Veröffentlichungstag der Anmeldung: **01.05.2013**
(21) Anmeldenummer: 11186321.3
(22) Anmeldetag: 24.10.2011
(51) Int. Cl.: B01D 61/04, C02F 9/00, C02F 1/04, C02F 1/42, C02F 1/44, C02F 1/66, C02F 5/10, C02F 101/36, C02F 103/36

(54) **Aufarbeitung von belastetem Abwasser aus der Produktion von Pflanzenschutzmitteln**

(71) Anmelder: cobos Fluid Service GmbH, 80809 München (DE)
(72) Erfinder: Kasel, Dr. Torsten, 40764 Langenfeld (DE)
(74) Vertreter: Becker Kurig Straus

(57) **Zusammenfassung**

Die vorliegende Erfindung betrifft die Aufarbeitung von mit organischen Stoffen hochbelasteten Abwässern, welche insbesondere bei der großtechnischen Herstellung von Pflanzenschutzmitteln aller Art anfallen. Insbesondere werden eine Vorrichtung beschrieben, umfassend eine Filtrationseinheit, welcher ein Verdampfer, und optional eine Umkehrosmoseanlage nachgeschaltet ist, sowie ein Verfahren umfassend Filtrieren des Abwassers zum Erhalten eines Filtrats, Verdampfen und Kondensieren des Filtrats zum Erhalten eines Kondensats, und optional Unterziehen des Kondensats einer Umkehrosmose zum Erhalten eines gesäuberten Abwassers.

## Beschreibung

Die vorliegende Erfindung betrifft die Aufarbeitung von mit organischen Stoffen hochbelasteten Abwässern, welche insbesondere bei der großtechnischen Herstellung von Pflanzenschutzmitteln aller Art anfallen. Insbesondere werden eine Vorrichtung beschrieben, umfassend eine Filtrationseinheit, welcher ein Verdampfer, und optional eine Umkehrosmoseanlage nachgeschaltet ist, und ein Verfahren umfassend Filtrieren des Abwassers zum Erhalten eines Filtrats, Verdampfen und Kondensieren des Filtrats zum Erhalten eines Kondensats, und optional Unterziehen des Kondensats einer Umkehrosmose zum Erhalten eines gesäuberten Abwassers.

Die CN 101514044 betrifft ein Verfahren zur Behandlung von organischen Abwässern mittels eines Dreiphasenfließbettverfahrens. Das zu reinigende Abwasser enthält eine Konzentration von weniger als 500 mg/l an Nitrobenzol.

Die US 5,135,659 beschreibt eine Vorrichtung und ein Verfahren zum Behandeln von pestizidhaltigen Abwässern aus der Landwirtschaft. Das Verfahren betrifft insbesondere das Aufreinigen von Abwässern, die aus der Behandlung von Früchten mit Pestiziden nach der Ernte anfallen. Dem Abwasser wird ein Flokkungsmittel zum Bilden eines Präzipitats und eines Überstands zugegeben, das Präzipitat wird von dem Überstand abgetrennt. Anschließend wird der Überstand mit Aktivkohle behandelt.

Die US 4,915,842 betrifft ein Verfahren zum Abbau von Atrazin, wobei in wässriger Lösung vorliegendes Atrazin zuerst zu 2-Chlor-4,6-diamino-s-Triazin umgewandelt wird. Dieses wird anschließend von Mikroorganismen, wie beispielsweise bestimmten Bakterien des Genus Pseudomonas, metabolisiert.

Im Allgemeinen werden bei der Produktion von verkaufsfertigen Pflanzenschutzmitteln je nach Anwendung komplexe Formulierungen hergestellt, die als Konzentrate, meist in rieselfähiger Form, vermarktet werden. Für die Formulierung können aktive Wirkstoffe miteinander oder mit spezifischen Zuschlagstoffen, wie etwa Kaolin, Salze oder Polymere, kombiniert werden. Da die Formulierung in Batch-Prozessen erfolgt, ist eine häufige und sorgfältige Reinigung der Produktionsanlagen erforderlich. Dabei entstehen große Mengen hochbelastetes Spülwasser, das in der Regel für Entsorgungszwecke energieintensiv verbrannt werden muss. Bei der Verbrennung müssen allein aufgrund der aufzubringenden Verdampfungswärme des Wassers mindestens 700 kWh/m³ in Form von Wärmeenergie zugeführt werden.

Die der vorliegenden Erfindung zugrundeliegende Aufgabe besteht folglich darin, die Reinigung der Abwässer/Spülwässer kostengünstiger und energiesparender zu gestalten als durch deren Verbrennung. Eine weitere Aufgabe besteht darin eine Vorrichtung und ein Verfahren zur Säuberung von Abwässern bereitzustellen, welche/welches zur Säuerung von Abwässern aus der Pflanzenschutzmittelherstellung unabhängig von der Art des Pflanzenschutzmittels, d.h. für alle mittels chemischer Synthese hergestellten organischen Pflanzenschutzmittel, eingesetzt werden kann.

Diese Aufgaben wurden durch die Bereitstellung der erfindungsgemäßen Vorrichtung und des erfindungsgemäßen Verfahrens zur Säuberung von Abwässern gelöst. Die Vorrichtung umfasst eine Filtrationseinheit, welcher ein Verdampfer, und optional eine Umkehrosmoseanlage nachgeschaltet ist. Das Verfahren zur Säuberung von Abwässern umfasst Filtrieren des Abwassers zum Erhalten eines Filtrats, Verdampfen und Kondensieren des Filtrats zum Erhalten eines Kondensats, und optional Unterziehen des Kondensats einer Umkehrosmose zum Erhalten eines gesäuberten Abwassers.

Durch die Anwendung des erfindungsgemäßen Verfahrens und der zugrundeliegenden Anordnung der erfindungsgemäßen Vorrichtung kann der bei der Abwasserreinigung benötigte Energieverbrauch auf einen Bruchteil des bei der Verbrennung von Spülwasser anfallenden Verbrauchs verringert werden. Weiterhin können das erfindungsgemäße Verfahren und die Vorrichtung für alle mittels chemischer Synthese hergestellten organischen Pflanzenschutzmittel eingesetzt werden. Der Begriff Pflanzenschutzmittel wie hierin verwendet umfasst ebenfalls Schädlingsbekämpfungsmitteln, Herbizide und Fungizide. Organische Pflanzenschutzmittel sind alle Pflanzenschutzmittel deren aktiver Bestandteil eine Kohlenstoffverbindung darstellt.

Die vorstehend aufgeführten und andere Merkmale und Vorteile der vorliegenden Erfindung werden unter Bezug auf die nachstehend aufgeführte ausführliche Beschreibung besser verstanden werden, welche in Verbindung mit den beigefügten Zeichnungen zu sehen ist, worin:

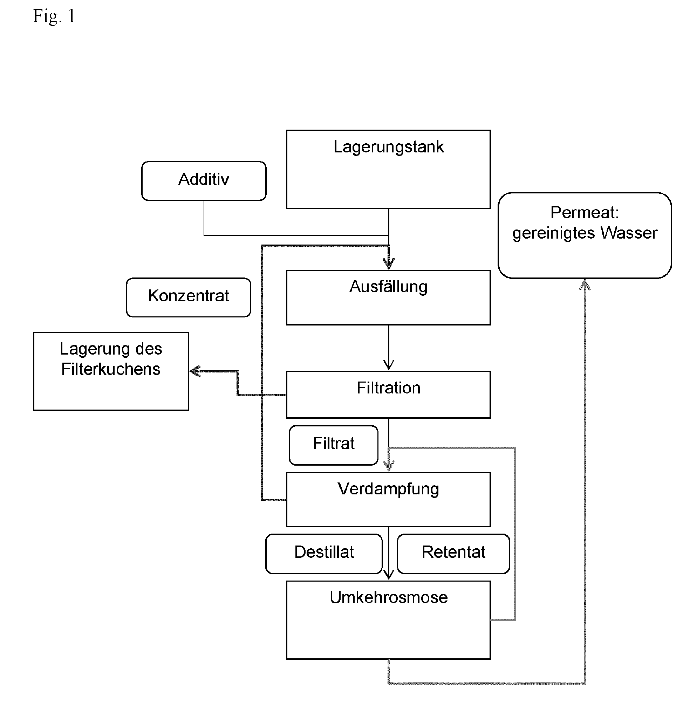

Die Fig. 1 den schematischen Ablauf des erfindungsgemäßen Verfahrens zeigt.
Die Fig. 2 den schematischen Aufbau eines Brüdenkompressionsverdampfers zeigt, welcher in dem erfindungsgemäßen Verfahren eingesetzt werden kann.

Die vorliegende Erfindung wird im Folgenden ausführlich beschrieben werden.

Gemäß einer bevorzugten Ausführungsform betrifft die vorliegende Erfindung eine Vorrichtung zur Säuberung von Abwässern. Die Vorrichtung umfasst (a) eine Filtrationseinheit, welcher (b) ein Verdampfer, und (c) optional eine Umkehrosmoseanlage nachgeschaltet sind.

Abwässer umfassen im vorliegenden Zusammenhang vor allem verunreinigtes Wasser/- Spülwasser, welches beim Auswaschen von Reaktoren zur Erzeugung organischer Stoffe anfällt, um die Reaktoren gegebenenfalls anderweitig, d.h. zur Synthese einer anderen Verbindung oder eines anderen Gemischs, einzusetzen. Dies sind insbesondere nicht umgesetzte Edukte, Zwischenprodukte, Nebenprodukte und Reste des eigentlichen Endprodukts bzw. der Endprodukte.

Alternativ kann das Abwasser gelöste aktiven Substanzen, d.h. einen oder mehrere Wirkstoffe ausgewählt unter Pflanzenschutzmitteln, Schädlingsbekämpfungsmitteln, Herbiziden und Fungiziden, sowie Salze, Zuschlagstoffe und bis zu 10 % suspendierte Feststoffe umfassen, die bei der Zubereitung bzw. Formulierung des zu marktfähigen Produkts anfallen.

Viele aktive Substanzen aus der Formulierung sind nur bedingt wasserlöslich, so dass die suspendierten Feststoffe ebenfalls aus aktiven Wirkstoffen, Salzen und Zuschlagstoffe bestehen können. Die Suspension besteht überwiegend aus feinsten Partikeln mit einer durchschnittlichen Partikelgröße bis zu 100µm, die sich auch nach längerem Stehenlassen geringfügig oder nicht absetzen. Der Ausdruck "Durchschnitt" bezeichnet im Folgenden das arithmetische Mittel. Die durchschnittliche Partikelgröße kann von 100nm bis zu 100µm betragen, vorzugsweise ist die durchschnittliche Partikelgröße zwischen 100nm und 90µm, 100nm und 80µm, 500nm und 80µm, 1µm und 70µm, 1µm und 60µm, 1µm und 50µm, 5µm und 50µm, 10µm und 50µm, 15µm und 50µm, 20µm und 50µm, 25µm und 70µm, 25µm und 40µm, sowie 25µm und 30µm.

Ein Stehenlassen für einen längeren Zeitraum betrifft hierbei eine Zeitspanne von mindestens 12, 24, 36, 48, 60, 72 oder 96 Stunden. Ein geringfügiges Absetzen betrifft hierbei weniger als 5%, 15%, 20% oder 25% der Gesamtmasse der Partikel.

Ziel der Abwasserbehandlung ist eine weitgehende oder vollständige Beseitigung der Abwasserinhaltsstoffe und damit einhergehende Wiederherstellung der natürlichen Wasserqualität, so dass eine Wiederverwertung oder Entsorgung ohne weitere Behandlungsmaßnahmen ermöglicht wird. Das gereinigte Wasser wird vorzugsweise zum Ausspülen von Reaktoren wiederverwendet. Die gesetzlich vorgeschrieben Maximalwerte der jeweiligen Inhaltsstoffe werden vorzugsweise unterschritten.

Eine weitgehende Wiederherstellung der natürlichen Wasserqualität betrifft gereinigtes Abwasser, welches einen geringeren Gehalt als 5x10⁻² g/l an gesamten organischen Kohlenstoff (TOC) aufweist. Vorzugsweise sind weniger als 4x10⁻² g/l, 3x10⁻² g/l, 2x10⁻² g/l, 10⁻² g/l, 5x10⁻³ g/l, 4x10⁻³ g/l, 3x10⁻³ g/l, 2x10⁻³ g/l, 10⁻³ bis 0 g/l am meisten bevorzugt 0 g/l TOC enthalten. Pflanzenschutzmittel, Schädlingsbekämpfungsmitteln, Herbizide und Fungizide liegen häufig fluoriert, chloriert, iodiert und/oder bromiert vor, so dass ein gereinigtes Abwasser im vorliegenden Zusammenhang einen geringeren Gehalt als 1x10⁻³ g/l an Adsorbierbaren Organisch gebundenen Halogenen (AOX) enthält. Vorzugsweise sind weniger als 5x10⁻² g/l, 4x10⁻² g/l, 3x10⁻² g/l, 2x10⁻² g/l, 10⁻² g/l, 5x10⁻³ g/l, 4x10⁻³ g/l, 3x10⁻³ g/l, 2x10⁻³ g/l, 10⁻³ bis 0 g/l am meisten bevorzugt 0 g/l AOX enthält. Vorzugsweise werden die in der Richtlinie 2008/105/EG des Europäischen Parlaments und des Rates aufgeführten Umweltsqualitätsnormen, deren Inhalte hierin mittels Bezugnahme in Gänze aufgenommen sind, für die aufgeführten Stoffe eingehalten, bzw. die darin aufgeführten Konzentrationen für die jeweiligen Gewässer deutlich unterschritten.

Ein gereinigtes Abwasser kann beispielsweise nach dem Saprobiensystem beurteilt werden und erfüllt vorzugsweise die Bedingungen der Gewässergüteklasse II, mehr bevorzugt der Gewässergüteklasse I-II und am meisten bevorzugt der Gewässergüteklasse I.

Jedoch können auch individuelle Grenzwerte ein oder mehrerer aktiver Substanzen/Wirkstoffe unterschritten werden. So werden die ubdividuellen Grenzwerte vorzugsweise um den Faktor 2, mehr bevorzugt um den Faktor 3, 4, 5, 10, 20, 50, 100 und am meisten bevorzugt um den Faktor 1000 unterschritten. Dem Fachmann ist klar, dass durch Wiederholen der Verfahrensschritte des erfindungsgemäßen Verfahrens bzw. durch Rückführen eines partiell aufgereinigten Abwassers zu einer vorherigen Stufe der vorliegenden Vorrichtung ein höherer Reinheitsgrad erzielt werden kann.

Die Bestimmung der Wasserparameter ist dem Fachmann geläufig. TOC kann beispielsweise nach einem der unter DIN EN 1484 aufgeführten Verfahren bestimmt werden. AOX kann gemäß DIN EN ISO 9562 bestimmt werden. Weitere die Wasserqualität kennzeichnende Werte können beispielsweise der Gesamthalogengehalt, chemische Sauerstoffbedarf (CSB; DIN 38 409-H41 Ausgabe Dez. 1980), biologische Sauerstoffbedarf (BSB; DIN EN 1899-1 und 1899-2) oder Sulfidgehalt sein. Die Inhalte der hierein erwähnten DIN Vorschriften sind mittels Bezugnahme in Gänze aufgenommen. Weitere die Wasserqualität kennzeichnende physikalische und chemische Größen sind dem Fachmann bekannt und können mittels geeigneter Verfahren bestimmt werden.

Das Abwasser kann Edukte, Zwischenprodukte, Nebenprodukte und Reaktionsprodukte umfassen, welche bei der Erzeugung von Zubereitungen, wie Pflanzenschutzmitteln, Schädlingsbekämpfungsmitteln, Herbiziden und Fungiziden, anfallen. Die Zubereitungen umfassen hierbei nicht nur den oder die jeweiligen Wirkstoffe sondern auch jegliche Art von Zubereitung mit Hilfsstoffen, die die Anwendung oder Verteilung erleichtern. Beispielhafte Zubereitungen sind Insektizide, Akarizide, Rodentizide, Larvizide, Algizide, Arborizide, Avizide, Bakterizide, Fungizide, Graminizide, Herbizide, Molluskizide, Nematizide, Viruzide und Ovizide. Ebenso können auch beliebige Mischungen dieser beispielhaften Zubereitungen im Abwasser enthalten sein.

Beispielhafte aktive Substanzen oder Wirkstoffe, welche in dem Abwasser enthalten sind, umfassen eines oder mehrere von Aclonifen, Atrazin, Chlorotoluron, Cyprosulfamid, Diflufenican, Fenamidon, Flufenacet, Fluopicolid, Flurtamon, Ioxynil, Iprodion, Iprovalicarb, Isoproturon, Isoxaflutol, Oxadiazon, Pencycuron, Propamocarb, Prothioconazol, Pyrimethanil, Quizalofob, Terbutylazin, Trifloxystrobin, Zoxamid, Glyphosat, Dithiocarbamate, Aluminium-Fosetyl, Parathion, Disulfoton, Demeton, Malathion, Prothoat, Dichlorvos, Naled, Methacrifos, Tetrachlorvinphos, Oxydemeton-methyl, Carbaryl, Carbofuran, Carbosulfan, MPMC, Aldicarb, Methomyl, Cartrap, Allethrin, Permethrin, Deltamethrin, Cyfluthrin, Cypermethrin, Trinoxol, Aminopyralid, clopyralid Dicamba, Glufosinat Ammonium, Fluroxypyr, Glyphosphat, Imazapyr, Imazapic, Linuron, Metolachlor, Paraquat, Pendimethalin, Picloram, Triclopyr. Im Gegenzug können ein oder mehrere der vorstehend aufgeführten Wirkstoffe nicht im Abwasser enthalten sein.

Alternativ erfordert die Reinigung eines Abwassers, das eines oder mehrere der vorstehend aufgeführten aktiven Substanzen oder Wirkstoffe, beispielsweise Atrazin, enthält nach dem Passieren des Verdampfers keinen weiteren Aufreinigungsschritt. Lediglich ein mehrfaches Passieren des Verdampfers kann hierbei notwendig sein.

Es sollte klar sein, dass Reaktoren zur Erzeugung organischer Stoffe jegliches Volumen umfassen können, beispielsweise, zwischen 1 und 35m³. Die Reaktoren, welche zur Erzeugung organischer Stoffe verwendet werden, können ebenso kleinere Volumen, wie beispielsweise bis zu 1m³ beinhalten. Entsprechend der Reaktorgröße sind die Mengen an anfallendem Abwasser in der Größenordnung von 10⁻³m³ bis 20m³, vorzugsweise 1 bis 20m³, 2m³, 3m³, 4m³, 5m³, 6m³, 7m³, 8m³, 9m³, 10m³, 11m³, 12m³, 13m³, 14m³, 15m³, 16m³, 17m³, 18m³, oder 19m³.

Reaktoren zur Herstellung der fertigen Formulierung umfassen üblicherweise ein Volumen zwischen 1 und 120m³. Es sollte klar sein, dass der Reaktor zur Erzeugung der Formulierung ebenso kleinere Volumen, wie beispielsweise bis zu 1m³ beinhalten. Entsprechend der Reaktorgröße sind die Mengen an anfallendem Abwasser in der Größenordnung von 10⁻³m³ bis 80m³, vorzugsweise 1 bis 80m³, 10 bis 80m³, 10 bis 70m³, 10 bis 60m³, 20 bis 50m³, 30 bis 50m³ oder bis 40 bis 50m³.

Die Filtrationseinheit wird zur mechanischen Trennung der im Spülwasser unlöslichen festen Partikel eingesetzt. Die Begriffe Filtration, Filtrierung, Filterung und Filtern werden hierbei synonym verwendet. Grundsätzlich können alle bekannten Filtrationsverfahren eingesetzt werden. Beispielhaft sind statische Filtrationsverfahren wie Schichtenfiltration, Membranfiltration; oder dynamische Filtrationsverfahren wie Nanofiltration, Ultrafiltration, Mikrofiltration, Querstromfiltration. Weitere geeignete Filtrationsverfahren umfassen Druckfiltration mittels beispielsweise einer Cricket-Filter-Einheit, Vakuumfiltration, Oberflächenfiltration oder Tiefenfiltration. Vorzugsweise werden einfache, d.h. störungsunanfällige, und kostengünstige Verfahren wie Druckfiltration und Vakuumfiltration verwendet. Bevorzugt ist Filtration aufgrund der Schwerkraft. Vorzugsweise läuft das zu trennende Gemisch hierbei durch einen Filter, der aus einem Textilgewebe als Filtermembran besteht. Die erforderliche Größe und der Aufbau der Filtrationseinheit sind dem Fachmann bekannt.

Von Schwierigkeit hierbei ist, dass die Auftrennung nicht nur aufgrund der eingesetzten Porengröße, sondern auch von anderen Mechanismen wie beispielsweise Partikelträgheit, Diffusionseffekte, Elektrostatik und Sperreffekt beeinflusst wird. Aufgrund dieser Mechanismen können Partikel zurückgehalten werden, die einen Durchmesser kleiner als die Porengröße des Filters aufweisen, und schnell zu einer Blockade der Filtermembran führen können.

Filtration vor einem Verdampfen ist jedoch unerlässlich, da einige aktive Substanzen oder Zuschlagstoffe einen Schmelzpunkt unter 80°C aufweisen, und damit unterhalb der normalen Arbeitstemperatur eines Verdampfers, wie beispielsweise eines Brüdenverdampfers von ca. 80 - 85°C, aufschmelzen. Eine direkte destillative Behandlung des Abwassers ohne vorherige Abtrennung der großen Feststoffmengen führt zu einem Aufschmelzen dieser niedrig schmelzenden Verbindungen im Verdampfer und damit im fortschreitenden Verdampfungsprozess zu verbackenen Ablagerungen im Wärmetauscher des Verdampfers, und einem damit verbundenen raschen und deutlichen Leistungsabfall.

Es ist dem Fachmann klar, dass die Filtration vor einem Verdampfen unterlassen werden kann, wenn der Schmelzpunkt aller aktiver Substanzen und/oder Zuschlagsstoffe über 85°C liegt. Auf die Filtration kann ebenfalls verzichtet werden wenn der Gesamtgehalt aller aktiver Substanzen oder Zuschlagsstoffe mit einem Schmelzpunkt unter 85°C vernachlässigbar ist, dass heißt weniger als 0,5% der Gesamtmasse ausmacht.

Aufgrund der mäßigen Löslichkeit der aktiven Substanzen und Zuschlagstoffe in Wasser, ist eine leichte Abreinigung eines derart verbackenen Wärmetauschers nicht möglich. Hierzu würden entweder große Mengen Waschwasser benötigt, welches die Volumenverringerung mittels Verdampfung sinnlos erscheinen lässt, oder eine größere Menge an organischen Lösemitteln, wie etwa Acetonitril, müsste eingesetzt werden. Der konstruktive Mehraufwand des dann explosionsgeschützten Verdampfers, sowie die hohen Kosten für Beschaffung und Entsorgung des organischen Lösemittels würden ein solches Vorgehen schnell unwirtschaftlich werden lassen.

Verdampfer bezeichnet im vorliegenden Zusammenhang jede Vorrichtung zur Umwandlung einer Flüssigkeit oder Flüssigkeitsgemisches in ihren dampfförmigen Aggregatzustand. Beispielhafte industrielle Verdampfer sind Robert-Verdampfer, Direktverdampfer und Dünnschichtverdampfer. Zur Effizienzsteigerung können mehrere Verdampfer in Reihe geschaltet werden. Der erste Verdampfer kann beispielsweise mit Heizdampf beheizt werden. Die nachfolgenden Verdampfer werden mit dem erzeugten Brüden bzw. Lösungsmitteldampf aus dem vorigen Verdampfer beheizt. Vom ersten bis zum letzten Verdampfer kann hierbei schrittweise der Druck gesenkt werden, um Energie aus dem Brüden zu gewinnen. Vorzugsweise wird ein Verdampfer eingesetzt, jedoch können auch 2, 3, 4 oder 5 in Reihe geschaltete Verdampfer verwendet werden.

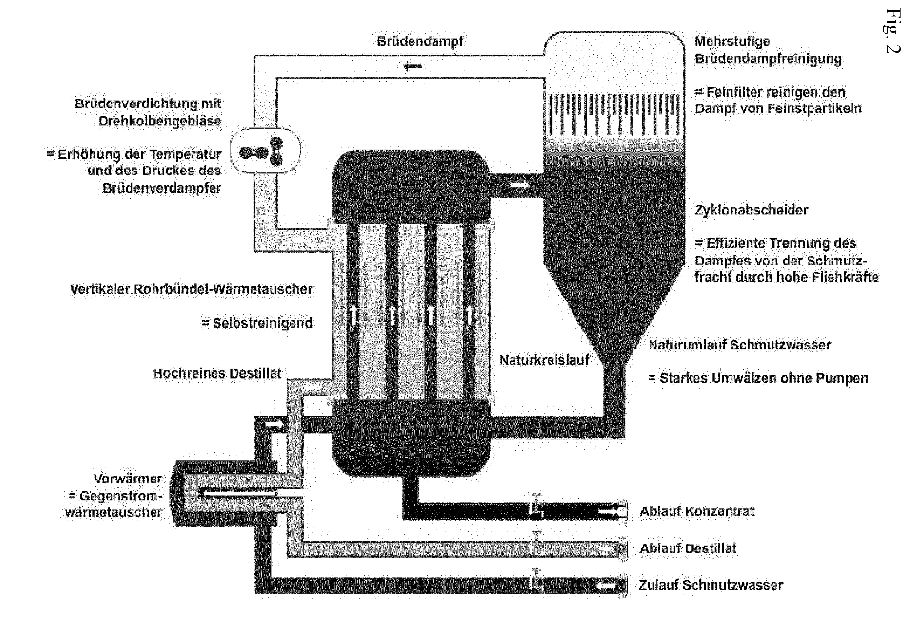

Bevorzugt wird ein, wie in Fig. 2 gezeigter, Brüdenverdampfer verwendet. Der Brüdenverdampfer kann einen Vorwärmer aufweisen, in welchem das erhaltene Destillat verwendet wird, um zufließendes Schmutzwasser vorzuwärmen. Ein selbstreinigender, vertikaler Rohrbündel-Wärmetauscher kann umfasst sein, welcher in Naturumlauf mit einem Zyklonabscheider steht. Naturumlauf und Brüdendampfrückführung aus dem Zyklonabscheider ermöglichen eine mehrstufige Brüdendampfreinigung, so dass auf eine Hintereinanderschaltung mehrerer Verdampfer verzichtet werden kann.

Die Umkehrosmose- oder Reversoosmoseanlage dient zur Aufkonzentrierung von in Flüssigkeiten gelösten Stoffen (Solute), bei der mit Druck der natürliche Osmose-Prozess umgekehrt wird, wie im vorliegenden Fall organische Reststoffe der vom Verdampfer erhaltenen Flüssigkeit. Der bei der Umkehrosmose angewendete Druck beträgt vorzugsweise zwischen 10⁶ Pa und 8x10⁶ Pa, vorzugsweise zwischen 10⁶ Pa und 7x10⁶ Pa, zwischen 2x10⁶ Pa und 6x10⁶ Pa, zwischen 2x10⁶ Pa und 5x10⁶ Pa, zwischen 2x10⁶ Pa und 4x10⁶ Pa, zwischen 2x10⁶ Pa und 3x10⁶ Pa, zwischen 2x10⁶ Pa und 2.5x10⁶ Pa, mehr bevorzugt 2.1x10⁶ Pa, 2.2x10⁶ Pa, 2.3x10⁶ Pa, 2.4x10⁶ Pa. Beispielhafte semipermeable Membranen sind dem Fachmann bekannt und werden gemäß den jeweiligen Herstellerangaben betrieben. Am Konzentratauslass kann der Druck über einen Druckregler gesteuert werden. Alternativ und bevorzugt kann ein Druckaustauscher genutzt werden, um den im Zulauf des Systems benötigten Druck aufzubauen und Energie zurückzugewinnen.

Um ein Auskristallisieren bzw. Ausfallen der Solute in den Membranen zu verhindern, können Antibelagmitteln hinzugegeben werden. Beispielhafte Antibelagmittel sind polymere Verbindungen auf Phosphat- oder Maleinsäurebasis. Durch den Einsatz von Antibelagmitteln wird eine Reinigung der Membran in größeren Zeitabständen erforderlich. Um Beschädigungen der Membran zu verhindern, können Filter vorgeschaltet werden. Ein Feinfilter, beispielsweise auf Aktivkohlebasis, kann chemische Beschädigungen durch beispielsweise reaktive Stoffe wie Chlor verhindern.

Gemäß einer weiteren Ausführungsform umfasst die Vorrichtung einen Ionenaustauscher, welcher der Filtrationseinheit nachgeschaltet und dem Verdampfer vorgeschaltet ist. Der Ionenaustauscher dient hierbei zur Entfernung von Calcium-Ionen, die möglicherweise in dem Filtrat, insbesondere aufgrund des Zusatzes von Weißkalk, vorliegen. Der Ionenaustauscher kann vom Gleichstrom-, Gegenstrom-, Schichtbett-, Mehrkammer-, Mischbett-, Doppelfluß- oder Sandwich-Typ sein. Geeignete Materialien, umfassen beispielsweise Polystyrolharze und Gelharze mit geeigneten funktionellen Gruppen, sowie Zeolithen oder andere organische Ionenaustauscher und sind dem Fachmann geläufig. Es können auch mehrere hintereinandergeschaltete Ionenaustauscher der vorstehenden Typen verwendet werden. Die Regeneration des Ionenaustauschmaterials kann auf gängige Weise durchgeführt werden.

Gemäß einer weiteren Ausführungsform umfasst die Vorrichtung eine Anmischapparatur zur Aufschlämmung, beispielsweise von Kalkmilch, die der Fällungseinheit vorgeschaltet ist.

Es wurde überraschend gefunden, dass die Zugabe von bestimmten Additiven bzw. Fällungsmitteln, insbesondere von gelöschtem Kalk, sogenanntem "Weißkalkhydrat", zu einer deutlichen Aggregation der suspendierten Feststoffe führt. Gelöschter Kalk kann beispielsweise in Form von Kalkmilch der Anmischapparatur hinzugegeben werden. Anstelle von Weißkalk können ebenso andere Formen von CaOH₂, d.h. mit anderen Zusatzstoffen oder reines CaOH₂, verwendet werden. Dem Fachmann ist klar, dass andere Verbindungen wie MgOH₂, mit oder ohne Zusatzstoffe, im Wesentlichen die gleiche Wirkung aufweisen und alternativ oder als Beimischung verwendet werden können. Ein weiterer Vorteil der Aggregation der suspendierten Feststoffe besteht darin einen Filter mit größerer Porengröße einzusetzen, welcher im Allgemeinen leichter gereinigt und wiederverwendet werden kann. Eine nachfolgende Filtration, lässt sich danach einfach durchführen. Vorzugsweise filtriert man dann mit geringem Druck oder unter alleiniger Ausnutzung der Schwerkraft. Der zugesetzte Kalk bildet eine Filterkuchenschicht, die für eine ausreichende Filtration sorgt. Unterstützt werden kann die Filtration durch einmalige Beaufschlagung von Stützmedien, wie etwa feinverteilte Cellulose, auf der Filtrationsmembran.

Das eingesetzte Fällungsmittel ist vorzugsweise Weißkalkhydrat, Calciumhydroxid mit Verunreinigungen oder in reiner Form und/oder Magnesiumhydroxid mit Verunreinigungen oder in reiner Form. Am meisten bevorzugt wird Weißkalkhydrat eingesetzt. Vorzugsweise wird das Abwasser vor dem Filtrieren in einer gesonderten Anmischapparatur mit dem Fällungsmittel versetzt.

Größere Mengen an Fällungsmittel können aufgrund höherer Konzentrationen an Ca²⁺ und/oder Mg²⁺ Kalk im Verdampfer ausbilden. Dies stört nicht nur den Betrieb des Verdampfers, sondern erfordert auch dessen Reinigung in geringen Zeitabständen.

Die Kalkbildung kann auf verschiedene Arten verringert oder vollständig werden. Erstens kann der pH-Wert unter 7 gesenkt werden. Aufgrund der Flüchtigkeit von Chlorid im Sauren kann Salzsäure nicht verwendet werden. Bei Verwendung von Schwefelsäure oder Phosphorsäure können hingegen Ausfällungen der Phosphate bzw. Sulfate auftreten. Von Vorteil ist der Einsatz von organischen Säuren, die einerseits nicht oder gering flüchtig sind und außerdem leichtlösliche Calciumsalze und/oder Magnesiumsalze bilden. Milchsäure oder auch Zitronensäure sind hierfür geeignet. Eine weitere Möglichkeit zur Verhinderung von Kalkablagerungen im Verdampfer wäre die Komplexierung der Calcium- und/oder Magnesiumionen mittels Komplexbildnern, wie etwa NTA oder EDTA. Darüber hinaus können die Ionen mittels Ionenaustausch aus dem Filtrat zu entfernt werden, etwa mittels Zeolithen oder mittels organischen Ionenaustauschern.

Der pH-Wert kann vorzugsweise mittels einer Neutralisationsanlage auf einen gewünschten Wert eingestellt werden. Gemäß einer weiteren Ausführungsform umfasst die Vorrichtung daher eine Neutralisationsanlage, welcher der Filtrationseinheit nachgeschaltet und dem Verdampfer vorgeschaltet ist. Der Aufbau einer Neutralisationsanlage ist dem Fachmann bekannt. Im vorliegenden Fall umfasst sie vorzugsweise einen Tank mit pH-Meßeinrichtung, Durchmischer und einer oder mehreren Pumpen zur Zugabe einer oder mehrerer einerseits nicht oder gering flüchtigen organischen Säuren.

Dem Fachmann ist klar, dass ein Ionenaustauscher und/oder eine Neutralisationsanlage verwendet werden können. Vorzugsweise werden eine Neutralisationsanlage und ein nachgeschalteter Ionenaustauscher eingesetzt, da in diesem Fall ein Ionenaustauscher geringer Kapazität verwendet werden kann, welcher zudem lediglich in größeren Zeitabständen einer Regeneration unterzogen werden muss.

Gemäß einer weiteren bevorzugten Ausführungsform ist die Filtrationseinheit eine mit niedrigem Druck arbeitende Taschenfilter-Einheit. Geeignete Materialen und Filtrationsbedingungen sind dem Fachmann geläufig. Beispielsweise wird kann ein geeignetes Filtrationsgewebe mit einem Stellmittel primär beaufschlagt werden. Vorzugsweise wird Sägemehl als Stellmittel verwendet.

Gemäß einer bevorzugten Ausführungsform ist der Verdampfer ein Brüdenkompressionsverdampfer. Weiter bevorzugt sind 2, 3, 4 oder 5 in Reihe geschaltete Brüdenkompressionsverdampfer. Bevorzugt wird ein, wie in Fig. 2 gezeigter, Brüdenverdampfer verwendet. Gemäß einer weiteren Ausführungsform wird die erfindungsgemäße Vorrichtung zur Säuberung von Abwässern aus der Pflanzenschutzmittelproduktion oder Herstellung von Schädlingsbekämpfungsmittel, Herbiziden und Fungiziden verwendet.

Gemäß einer bevorzugten Ausführungsform betrifft die vorliegende Erfindung ein Verfahren zur Säuberung von Abwässern, umfassend Filtrieren des Abwassers zum Erhalten eines Filtrats, Verdampfen und Kondensieren des Filtrats zum Erhalten eines Kondensats, und optional Unterziehen des Kondensats einer Umkehrosmose zum Erhalten eines gesäuberten Abwassers.

In einer weiteren bevorzugten Ausführungsform wird das Filtrieren mit einem Fällungsmittel durchgeführt. Das eingesetzte Fällungsmittel ist vorzugsweise Weißkalkhydrat, Calciumhydroxid mit Verunreinigungen oder in reiner Form und/oder Magnesiumhydroxid mit Verunreinigungen oder in reiner Form. Am meisten bevorzugt wird Weißkalkhydrat eingesetzt. Vorzugsweise wird das Abwasser vor dem Filtrieren in einer gesonderten Anmischapparatur mit dem Fällungsmittel versetzt.

In einer weiteren Ausführungsform wird das Filtrat vor dem Verdampfen mittels einer Säure neutralisiert. Die Säure bildet vorzugsweise leichtlösliche Calcium- und/oder Magnesiumsalze. Geeignete Säuren sind dem Fachmann geläufig und umfassen beispielsweise Milchsäure oder Zitronensäure.

In einer bevorzugten Ausführungsform wird das Filtrat vor dem Verdampfen und gegebenenfalls nach dem Neutralisieren mit einer Säure mit Pyrophosphaten und/oder kurzkettigen Polyacrylaten versetzt, die zur Immobilisierung der Calciumsalze verwendet werden können.

Alternativ und bevorzugt kann das das Filtrat vor dem Verdampfen mit einem Komplexbildner versetzt werden, um vorhandene zweiwertige Kationen vollständig oder teilweise zu entfernen. Beispielhafte Komplexbildner umfassen Nitrilotriessigsäure (NTA), Ethylendiamintetraessigsäure bzw. Ethylendiamintetraacetat (EDTA), Gluconsäure, Weinsäure, Zitronensäure und deren Salze, Tetranatrium-Iminodisuccinat und Triethanolamin. Bevorzugte Komplexbildner sind Nitrilotriessigsäure und Ethylendiamintetraessigsäure bzw. Ethylendiamintetraacetat. Die Komplexbildner können als wässrige Lösung in einem Tank bereitgestellt werden, der für eine dosierte Zugabe der Lösung zu dem Filtrat angepasst ist.

Gemäß einer weiteren Ausführungsform wird Filtrat vor dem Verdampfen und gegebenenfalls nach dem Neutralisieren bzw. Versetzen mit einem Komplexbildner mit einem Ionenaustauscher behandelt.

In einer anderen bevorzugten Ausführungsform werden die Feststoffreste, die bei den jeweiligen Verfahrenschritten anfallen, einem vorgelagerten oder dem gleichen Verfahrensschritt erneut zugeführt, um einen höheren Aufreinigungsgrad zu erzielen. So kann der beim Filtrieren erhaltene Filterkuchen, der beim Verdampfen erhaltene Destillationssumpf, sowie das bei der Umkehrosmose erhaltene Retentat oder Solut, einem vorgelagerten oder dem gleichen Verfahrensschritt erneut und/oder mehrfach, beispielsweise 2-, 3-, 4-, 5-, 6-, 7, 8-, 9-oder 10-fach, wieder zugeführt werden. Es ist klar, dass dies für Filterkuchen, Destillationssumpf, oder Solut individuell oder für die denkbaren Kombinationen wie Filterkuchen und Destillationssumpf, Filterkuchen und Solut, Destillationssumpf und Solut, oder eine Kombination von Filterkuchen, Destillationssumpf, und Solut gilt. Besonders bevorzugt für die Erzielung einer hohen Reinigungsleistung ist mehrfache Umkehrosmose. Das verbleibende Solut aus der Umkehrosmose-Behandlung kann vorteilhaft der Destillation wieder zugeführt werden, um die Abfallfracht zu minimieren.

In einer weiteren bevorzugten Ausführungsform werden die Flüssigkeiten, d.h. partiell gereinigtes Abwasser, die bei den jeweiligen Verfahrenschritten anfallen, einem vorgelagerten oder dem gleichen Verfahrensschritt erneut zugeführt, um einen höheren Aufreinigungsgrad zu erzielen. So kann das beim Filtrieren erhaltene Filtrat, das beim Verdampfen und Kondensieren erhaltene Kondensat, sowie das bei der Umkehrosmose erhaltene Solvent, einem vorgelagerten oder dem gleichen Verfahrensschritt erneut und/oder mehrfach, beispielsweise 2-, 3-, 4-, 5-, 6-, 7, 8-, 9- oder 10-fach, wieder zugeführt werden. Dies gilt für Filtrat, Kondensat oder Solvent individuell oder für die denkbaren Kombinationen wie Filtrat und Kondensat, Filtrat und Solvent, Kondensat und Solvent, oder eine Kombination von Filtrat, Kondensat und Solvent. Besonders bevorzugt für die Erzielung einer hohen Reinigungsleistung ist mehrfache Umkehrosmose. Das verbleibende Solvent aus der Umkehrosmose-Behandlung kann vorteilhaft dem Verdampfer wieder zugeführt werden. Gemäß einer weiteren Ausführungsform wird das Filtrieren mit einer Taschenfiltrationseinheit durchgeführt.

Das erfindungsgemäße Verfahren und die vorliegende Vorrichtung zeichnen sich dadurch aus, dass Abwässer mit mehreren aktiven Substanzen bzw. Wirkstoffen aufgereinigt werden können. Gemäß einer weiteren Ausführungsform sind im dem Abwasser daher mindestens 2 aktive Substanzen bzw. Wirkstoffe enthalten. Mehr bevorzugt sind mindestens 3, 4, 5, 6, 7, 8, 9, 10 oder 15 aktive Substanzen und am meisten bevorzugt sind mindestens 20 aktive Substanzen in dem Abwasser enthalten.

Gemäß einer weiteren Ausführungsform betrifft die Erfindung die bei dem erfindungsgemäßen Verfahren erhaltenen Verfahrensprodukte, insbesondere gesäubertes Abwasser sowie das bei der Umkehrosmose anfallende Solut. Es ist klar, dass das gesäuberte Abwasser durch die darin enthaltenen geringen Mengen an gelöste aktiven Substanzen, Salze und Zuschlagstoffe, nicht umgesetztes Edukt, Zwischenprodukt(e), Nebenprodukt(e) und Reste des Endprodukts gekennzeichnet ist. Gleiches gilt für das bei der Umkehrosmose anfallende Solut, in welchem diese Stoffe in deutlich höheren Konzentrationen anfallen.

Die vorliegende Erfindung wird in den nachstehend aufgeführten Beispielen detailliert beschrieben. Es ist jedoch klar, dass diese Beispiele lediglich zum Zweck der Veranschaulichung dienen und der Schutzbereich der vorliegenden Erfindung nicht darauf begrenzt ist.

### Beispiel 1

Ein Herbizid, welches 47,0 Gew.-% Isoproturon, 4,2 Gew.-% Difluenican, 1,0-5,0 Gew.-% ethoxyliertes Polyarylphenol als aktive Bestandteile und weitere Zuschlagsstoffe umfasst, wird hergestellt.

Nach Auswaschen des Reaktors, in welchem diese Formulierung hergestellt wurde, umfasst das Abwasser 1,7 mg/l AOX (gemäß ISO 9562 bestimmt), 0,2 mg/l Sulfid (gemäß DIN 38405 D27 bestimmt) und 6 mg/l Chlorid (gemäß DIN EN ISO 10304-1/-2 bestimmt).

Das Abwasser wird in einer Anmischapparatur mit Weißkalk versetzt, in einer Taschenfilter-Einheit unter Verwendung von Sägemehl als Stellmittel filtriert und in einer Neutralisationsanlage durch Zugabe von Zitronensäure auf einen pH-Wert von 6,8-6,9 eingestellt. Die Flüssigkeit wird anschließend in einen wie beispielsweise in Fig. 2 gezeigten Brüdenverdampfer überführt. Das erhaltene Destillat wird anschließend einer Umkehrosmose unterzogen.

Ein gesäubertes Abwasser wurde erhalten, in welchem die Grenzwerte von Isoproturon von 0.3 µg/l deutlich unterschritten wurden. Die Grenzwerte von Difluenican werden ebenfalls eingehalten.

### Beispiel 2

Für einen großtechnischen Versuch werden Spülwässer aus der laufenden Produktion aus mehreren Kampagnen gemischt. Die Mischung weist die in Tabelle 1 aufgeführten Parameter auf.

**Tabelle 1: Zusammensetzung Spülwasser**

| | |
|---|---|
| Trockensubstanz: | 5,5 % |
| CSB: | 58.500 mg/l |
| pH: | 4,7 |

Folgende aktive Substanzen sind in der Mischung präsent: Aclonifen, Chlorotoluron, Cyprosulfamid, Diflufenican, Fenamidon, Flufenacet, Fluopicolid, Flurtamon, Ioxynil, Iprodion, Iprovalicarb, Isoproturon, Isoxaflutol, Oxadiazon, Pencycuron, Propamocarb, Prothioconazol, Pyrimethanil, Quizalofob, Terbutylazin, Trifloxystrobin, Zoxamid, Glyphosat, Dithiocarbamate, Aluminium-Fosetyl, Mancozeb und Kupferoxychlorid.

20 m³ dieses Abwassers werden batchweise in einem gerührten 600 1-Tank portionsweise mit 9 kg Ca(OH)2 versetzt und nach 5 minütigem Rühren über eine Cricket-Filter-Einheit filtriert. Die Cricketfilter weisen insgesamt eine Filterfläche von 4 m² auf und sind mit einem 50 µm Nylon-Filter versehen. Zunächst erfolgt ein Anschwemmen mit suspendierter Cellulose, dann wird die Mischung aus dem Rührbehälter bei einer Filterleistung von 75 l/m² filtriert. Das Filtrat wird mit 4 l Zitronensäure (50%-ig) pro m³ neutralisiert und einer Destillation unterworfen.

Dabei wird aus dem Filtrat 92 % Destillat mit einem CSB-Wert von 1.600 mg/l gewonnen. Dieses Destillat wird einer dreistufigen Umkehrosmose-Anlage zugeführt und mit einer Ausbeute von über 75 % als sauberes Permeat zurückgewonnen.

Eine Analyse auf aktive Substanzen ergibt für alle Inhaltsstoffe eine Konzentration bis max. 5,0 µg/l für Einzelfälle, typischerweise aber Konzentrationen unter 0,05 µg/l.

## Patentansprüche

1. Vorrichtung zur Säuberung von Abwässern, umfassend:
(a) eine Filtrationseinheit, welcher
(b) ein Verdampfer, und
(c) optional eine Umkehrosmoseanlage
nachgeschaltet sind.

2. Vorrichtung nach Anspruch 1, worin die Vorrichtung einen Ionenaustauscher umfasst, welcher der Filtrationseinheit nachgeschaltet und dem Verdampfer vorgeschaltet ist.

3. Vorrichtung nach einem der vorstehenden Ansprüche, worin die Vorrichtung eine Anmischapparatur zur Aufschlämmung von Kalkmilch umfasst, die der Fällungseinheit vorgeschaltet ist.

4. Vorrichtung nach einem der vorstehenden Ansprüche, worin die Filtrationseinheit eine mit niedrigem Druck arbeitende Taschenfilter-Einheit ist.

5. Vorrichtung nach einem der vorstehenden Ansprüche, worin der Verdampfer ein Brüdenkompressionsverdampfer ist.

6. Verwendung der Vorrichtung nach einem der vorstehenden Ansprüche zur Säuberung von Abwässern aus der Pflanzenschutzmittelproduktion.

7. Verfahren zur Säuberung von Abwässern, umfassend:
(a) Filtrieren des Abwassers zum Erhalten eines Filtrats,
(b) Verdampfen und Kondensieren des Filtrats zum Erhalten eines Kondensats, und
(c) optional Unterziehen des Kondensats einer Umkehrosmose zum Erhalten eines gesäuberten Abwassers.

8. Verfahren nach Anspruch 7, wobei das Filtrieren mit einem Fällungsmittel durchgeführt wird.

9. Verfahren nach Anspruch 8, wobei das das Filtrat vor dem Verdampfen mittels einer Säure neutralisiert wird, welche leichtlösliche Calciumsalze bildet.

10. Verfahren nach einem der Ansprüche 7-9, wobei dem Filtrat vor dem Verdampfen und gegebenenfalls nach dem Neutralisieren mit einer Säure mit Pyrophosphaten und/oder kurzkettigen Polyacrylaten versetzt wird

11. Verfahren nach einem der Ansprüche 7-9, wobei das das Filtrat vor dem Verdampfen gegebenenfalls nach dem Neutralisieren mit einer Säure mit einem Komplexbildner versetzt wird.

12. Verfahren nach einem der Ansprüche 7-11, worin das Filtrat vor dem Verdampfen und gegebenenfalls nach dem Neutralisieren mit einer Säure mit einem Ionenaustauscher behandelt wird.

13. Verfahren nach einem der Ansprüche 7-12, wobei Reste der Schritte (a), (b) und/oder (c) dem jeweils vorgelagerten Schritt zugeführt werden.

14. Verfahren nach einem der Ansprüche 7-13, wobei das Filtrieren mit einer Taschenfiltrationseinheit durchgeführt wird, in welcher ein Filtrationsgewebe mit einem Stellmittel primär beaufschlagt wird.

15. Verfahren nach einem der Ansprüche 7-14, wobei das Abwasser mindestens zwei aktive Substanzen enthält.
